(19) Europäisches Patentamt
European Patent Office
Office européen des brevets

(11) EP 3 495 321 A1

(12) EUROPÄISCHE PATENTANMELDUNG

(43) Veröffentlichungstag:
12.06.2019 Patentblatt 2019/24

(51) Int Cl.:
C01B 39/02 (2006.01)  C01B 39/46 (2006.01)

(21) Anmeldenummer: 17205799.4

(22) Anmeldetag: 07.12.2017

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME
Benannte Validierungsstaaten:
MA MD TN

(71) Anmelder: Evonik Degussa GmbH
45128 Essen (DE)

(72) Erfinder:
• Schmidt, Franz
60386 Frankfurt (DE)

• ANTON, Johan
63486 Bruchköbel (DE)
• PASCALY, Matthias
60599 Frankfurt (DE)
• BERNHARD, Andrea
60388 Frankfurt (DE)
• WIELAND, Stefan
63456 Hanau (DE)
• MORELL, Heiko
63110 Rodgau (DE)
• KRESS, Peter
63791 Karlstein (DE)
• HAGEMANN, Michael
63796 Kahl (DE)

(54) **HERSTELLUNG VON PULVERFÖRMIGEN, PORÖSEN KRISTALLINEN METALLSILIKATEN MITTELS FLAMMENSPRÜHPYROLYSE**

(57) Die vorliegende Erfindung betrifft ein Verfahren zur Herstellung eines pulverförmigen, porösen kristallinen Metallsilikats, umfassend die folgenden Schritte:

a) Hydrothermalsynthese in einem wässrigen Gemisch enthaltend (A) mindestens eine Siliziumquelle, (B) mindestens eine Metallquelle und (C) mindestens einen Mineralisierer unter Erhalt einer wässrigen Suspension enthaltend ein poröses kristallines Metallsilikat als Reaktionsprodukt; und

b) Kalzination des Reaktionsproduktes, dadurch gekennzeichnet, dass die Kalzination mittels Flammensprühpyrolyse bei einer adiabaten Verbrennungstemperatur in einem Bereich von 450-2200 °C durchgeführt wird, wobei die in Schritt a) erhaltene Suspension mit einem Feststoffgehalt von ≤ 70 Gew.-% in eine durch Verbrennen eines Brennstoffes in Gegenwart von Sauerstoff erzeugte Flamme versprüht wird unter Bildung eines pulverförmigen, porösen kristallinen Metallsilikats.

**Bild 1**

EP 3 495 321 A1

**Beschreibung**

Die vorliegende Erfindung betrifft ein Verfahren zur Herstellung von pulverförmigen, porösen kristallinen Metallsilikaten.

Als Silikate bezeichnet man die durch $SiO_4$-Tetraeder aufgebauten Verbindungen, deren Tetraeder auf verschiedene Weise miteinander verknüpft sein können. Solche Silikatstrukturen können andere Elemente, beispielsweise Metalle enthalten und werden dann Metallsilikate genannt. Ein wichtiges Beispiel solcher Metallsilikate sind Zeolithe.

Zeolithe sind kristalline Silikate, beispielsweise Alumosilikate, bei denen durch eine dreidimensionale Verknüpfung von Silikat-Tetraedern ($SiO_4^-$) und anderen Struktureinheiten (beispielsweise $AlO_4^-$-Tetraedern) regelmäßige Strukturen mit Hohlräumen und Poren entstehen. Es existieren diverse Typen von Zeolithen, die nach deren Strukturtyp genannt werden. Allgemeine Informationen zu Zeolithen, insbesondere Kristallstrukturtypen bekannter Zeolithe sind in Ullmann's Encyclopedia of Industrial Chemistry, Kapitel "Zeolites", veröffentlicht online am 15.04.2012, DOI: 10.1002/14356007.a28_475.pub2, zu finden.

Zeolithe können dank ihrer einzigartigen Porenstruktur interessante katalytische Eigenschaften aufweisen und beispielsweise als Oxidationskatalysatoren eingesetzt werden.

Synthetische Zeolithe werden oft über Hydrothermalsynthese in Gegenwart eines porenstrukturbildenden Templats hergestellt. In CN 101348263 A wird beispielsweise ein Verfahren zur Herstellung von Zeolithen mit einem Si/Al Verhältnis von 50 bis 5000 und einer Partikelgröße von 30 bis 200 μm offenbart, dass die folgenden Prozessschritte enthält: (1) Bereitstellung eines Reaktionsgemisches enthaltend Silizium- und Aluminiumquellen und ein Metallhydroxid; (2) Hydrolysereaktion; (3) nachfolgende Sprühtrocknung des Gemisches unter Bildung von Alumosilikatmikrosphären; (4) hydrothermale Reaktion der zuvor hergestellten Mikrosphären in Gegenwart von Wasser und eines organischen Amins bei einer Temperatur von 160 bis 200 °C und Kristallisation des gebildeten Zeoliths, (5) dessen Waschung, (6) Trocknen und (7) Kalzinieren bei einer Temperatur von 350 bis 800 °C.

Aus US 4410501 A ist ein Verfahren zur Herstellung von Titansilikalit bekannt. Die Herstellung des Titansilikalits erfolgt durch (1) Ausbildung eines Synthesegels, ausgehend von einer hydrolysierbaren Siliziumverbindung wie beispielsweise Tetraethylorthosilikat und einer hydrolysierbaren Titanverbindung in Gegenwart von Tetra-n-propylammoniumhydroxid bei 175 °C, (2) darauffolgende Hydrothermalsynthese, Hydrolyse und Kristallisation dieser Reaktionsmischung. Nach Beendigung der Kristallisation werden die Kristalle (3) durch Filtration abgetrennt, (4) gewaschen, (5) getrocknet und schließlich (6) 6 h lang bei 550 °C kalziniert.

Aus EP 814058 A1 ist die Herstellung von diversen Zeolithen aus den entsprechenden pyrogen hergestellten Metall-Silizium-Mischoxiden bekannt. Die Metall-Silizium-Mischoxide werden durch (1) Hydrothermalsynthese bei einer Temperatur zwischen 100 und 220 °C in Gegenwart eines Templates ausgewählt aus Aminen, Ammoniumverbindungen oder (Erd)Alkalihydroxiden, gefolgt von (2) Filtrieren, (3) Waschen mit Wasser und (4) Kalzinieren, beispielsweise bei einer Temperatur von 550 °C innerhalb von vier Stunden, erhalten. In einer besonderen Ausführungsform wird durch Sprühtrocknung ein prä-formiertes, Templat haltiges Mischoxidgranulat hergestellt, das nachfolgend einer Hydrothermalsynthese unterzogen, filtriert, gewaschen und kalziniert wird.

Aus CN1482062 ist ein Verfahren zur Herstellung von Titansilikalit-1 bekannt, bei dem festes Silicagel mit einer anorganischen Titanquelle hydrothermal umgesetzt wird. Das Verfahren umfasst folgende Schritte: (1) Imprägnierung von festem Silicagel mit $Ti(SO_4)_2$, (2) Kalzinieren, (3) Hydrothermalsynthese von Silicagel mit $Ti(SO_4)_2$ + TPAOH + Wasser, (4) Filtration, (5) Waschen, (6) Trocknen, (7) Kalzinieren.

Alle zuvor beschriebenen Verfahren beinhalten zeitaufwändige, mehrstufige Prozeduren. Insbesondere ist ein Filtrieren und Waschen des gebildeten Zeoliths notwendig, um Verunreinigungen durch Reaktionspartner bzw. nicht reagierte Edukte etc. zu entfernen. Dabei entstehen beträchtliche Mengen an Schmutzwasser, die oft für die Wasserorganismen schädliche und schwer entsorgbare Substanzen enthalten wie Tetraalkylammoniumsalze. Es wäre deswegen sehr wünschenswert, ein Verfahren zu entwickeln, das einerseits eine geringere Anzahl an Prozessschritten aufweist als herkömmliche Verfahren, und andererseits das Problem mit der Entsorgung der Produktionsabfälle löst.

Diese Aufgaben werden gelöst mit dem Verfahren zur Herstellung eines pulverförmigen, porösen kristallinen Metallsilikats, umfassend die folgenden Schritte:

a) Hydrothermalsynthese in einem wässrigen Gemisch enthaltend (A) mindestens eine Siliziumquelle, (B) mindestens eine Metallquelle und (C) mindestens einen Mineralisierer unter Erhalt einer wässrigen Suspension enthaltend ein poröses kristallines Metallsilikat als Reaktionsprodukt; und

b) Kalzination des Reaktionsproduktes, dadurch gekennzeichnet, dass

die Kalzination mittels Flammensprühpyrolyse bei einer adiabaten Verbrennungstemperatur in einem Bereich von 450-2200 °C durchgeführt wird, wobei die in Schritt a) erhaltene Suspension mit einem Feststoffgehalt von ≤ 70 Gew.-% in eine durch Verbrennen eines Brennstoffes in Gegenwart von Sauerstoff erzeugte Flamme versprüht wird unter Bildung eines pulverförmigen, porösen kristallinen Metallsilikats.

Die in Schritt a) des erfindungsgemäßen Verfahrens hergestellte Metallsilikatstruktur bleibt überaschenderweise während der thermischen Behandlung bei höheren Temperaturen in Schritt b) erhalten, dies trifft besonders auf die poröse Struktur von Zeolithen zu. Die geordnete Porenstruktur beispielsweise von Zeolithen wird bei erhöhten Temperaturen bekanntlich zerstört. So unterliegt beispielsweise Titansilikalit-1 laut Advanced Materials Research Vol. 287-290, 2011, S. 317-321, schon bei 650 °C irreversiblen Strukturveränderungen, die die katalytischen Eigenschaften solcher Materialien negativ beeinflussen können.

Das durch das erfindungsgemäße Verfahren erhältliche pulverförmige, poröse kristalline Metallsilikat weist bevorzugt eine Zeolithstruktur auf.

Zeolithe sind kristalline Silikate, beispielsweise Alumosilikate, bei denen durch eine dreidimensionale Verknüpfung von Silikat-Tetraedern ($SiO_4^-$) und anderen Struktureinheiten (beispielsweise $AlO_4^-$-Tetrahedern) über Sauerstofatome regelmäßige Strukturen mit Hohlräumen und Poren entstehen. Es existieren diverse Typen von Zeolithen, die nach deren Strukturtyp genannt werden. Allgemeine Informationen zu Zeolithen, insbesondere Kristallstrukturtypen bekannter Zeolithe sind in Ullmann's Encyclopedia of Industrial Chemistry, Kapitel "Zeolites" veröffentlicht online am 15.04.2012, DOI: 10.1002/14356007.a28_475.pub2, zu finden.

Das durch das erfindungsgemäße Verfahren erhältliche pulverförmige, poröse kristalline Metallsilikat weist bevorzugt eine Zeolithstruktur mit einer Kristallstruktur vom Typ LTA, MFI, FAU, MOR, MEL oder MWW auf. Ganz besonders bevorzugt weisen die Metallsilikate eine Kristallstruktur vom Typ MFI und MEL auf. Der jeweilige Kristallstrukturtyp kann durch die Strukturanalyse mittels Röntgenbeugung (X-ray diffraction, XRD) bestimmt werden. Strukturtypen für mikro- und mesoporöse Materialien werden von der International Zeolite Association (IZA, www.iza-online.org) festgelegt.

Das durch das erfindungsgemäße Verfahren zugängliche pulverförmige, poröse kristalline Metallsilikat weist bevorzugt Mikro- und Mesoporen auf. Unter Mikroporen werden nach IUPAC-Definition solche mit einem Durchmesser von kleiner 2 nm, unter Mesoporen solche mit 2 bis 50 nm verstanden.

Die allgemeine Zusammensetzung der pulverförmigen, porösen kristallinen Metallsilikate ist üblicherweise

$$(SiO_2)_{1-x}(A_mO_n)_x,$$

A steht für ein Metall der Wertigkeit p aus der Gruppe bestehend aus Ti, Al, Zr, Fe, Sn, Ge, In, und B; m und n stehen für die Atomzahl, wobei $m \times p = 2n$; x steht für eine Zahl zwischen 0,0001 und 0,25, vorzugsweise zwischen 0,001 und 0,2 und insbesondere zwischen 0,005 und 0,1. Bei mehreren unterschiedlichen Metallen A bezieht sich x entsprechend auf die Summe aller Metalloxide. A steht bevorzugt für die Elemente Titan (Ti), Aluminium (Al), Zirkonium (Zr), Eisen (Fe), Zinn (Sn) und Bor (B), Ge (Germanium), In (Indium) wobei Titan (Ti) besonders bevorzugt ist.

Das durch das erfindungsgemäße Verfahren erhältliche pulverförmige, poröse kristalline Metallsilikat kann vorzugsweise Titansilikat, Borsilikat, Zirkonsilikat, Alumosilikat oder Eisensilikat sein. Besonders bevorzugt handelt es sich dabei um Titansilikat, insbesondere Titansilikalit-1 (MFI-Struktur) oder Titansilikalit-2 (MEL-Struktur).

Die im erfindungsgemäßen Verfahren eingesetzte Siliziumquelle kann prinzipiell jede Verbindung sein, die Siliziumdioxid oder Silizium haltiges Mischoxid enthält, oder es durch Oxidation oder thermische und/oder hydrolytische Zersetzung bilden kann. Bevorzugt sind jedoch die Verbindungen, die amorphes Siliziumdioxid oder amorphes Silizium haltiges Mischoxid enthalten, oder es durch Oxidation oder thermische und/oder hydrolytische Zersetzung bilden können. Eine solche Siliziumquelle kann beispielsweise aus der Gruppe bestehend aus pyrogen hergestelltes Siliziumdioxid, durch Fällung hergestelltes Siliziumdioxid, durch Sol-Gelprozess hergestelltes Siliziumdioxid und Gemischen davon, ausgewählt werden.

Pyrogen hergestelltes Siliziumdioxid, auch pyrogene Kieselsäure genannt, wird mittels Flammenhydrolyse oder Flammenoxidation hergestellt. Dabei werden hydrolysierbare oder oxidierbare Ausgangsstoffe in der Regel in einer Wasserstoff-Sauerstoffflamme oxidiert, beziehungsweise hydrolysiert. Als Ausgangsstoffe für pyrogene Verfahren können organische und anorganische Stoffe eingesetzt werden. Besonders geeignet ist Siliziumtetrachlorid. Die so erhaltene hydrophile Kieselsäure ist amorph. Pyrogene Kieselsäuren liegen in der Regel in aggregierter Form vor. Unter "aggregiert" ist zu verstehen, dass sogenannte Primärpartikel, die bei der Genese zunächst entstehen, sich im weiteren Reaktionsverlauf fest miteinander unter Bildung eines dreidimensionalen Netzwerkes verbinden. Die Primärpartikel sind weitestgehend porenfrei und weisen auf ihrer Oberfläche freie Hydroxylgruppen auf.

Das durch Fällung hergestellte Siliziumdioxid (gefällte Kieselsäure) bildet sich beispielsweise bei der Umsetzung von Wasserglas-Lösungen (Natriumsilikate) mit Mineralsäuren.

Der Sol-Gel-Prozess ist ein Verfahren zur Herstellung nichtmetallischer anorganischer oder hybridpolymerer Materialien aus kolloidalen Dispersionen, den sogenannten Solen.

Bei den Ausgangsmaterialien für eine Solsynthese handelt es sich oft um Alkoholate von Metallen oder Silizium. Die Hydrolyse von solchen Ausgangsmaterialien und die Kondensation zwischen den dabei entstehenden reaktiven Spezies, sind die wesentlichen Grundreaktionen des Sol-Gel-Prozesses. Als Siliziumquelle für Sol-Gel-Prozesse eignen sich insbesondere die Tetraalkylorthosilikate, wobei Alkyl vorzugsweise ausgewählt ist aus der Gruppe bestehend aus Methyl, Ethyl, Propyl oder Butyl. Das am meisten bevorzugte Tetraalkylorthosilikat ist Tetraethylorthosilikat.

Die im erfindungsgemäßen Verfahren eingesetzte Metallquelle kann jede Verbindung sein, die Metalloxid oder Metall haltiges Mischoxid enthält oder das entsprechende Metalloxid oder Mischoxid durch Oxidation oder thermische und/oder hydrolytische Zersetzung bilden kann. Als Metallquelle werden im Rahmen der vorliegenden Erfindung die Quellen der Elemente Titan (Ti), Aluminium (Al), Zirkonium (Zr), Eisen (Fe), Zinn (Sn), Germanium (Ge), Indium (In) und Bor (B) eingesetzt, wobei Titan besonders bevorzugt ist.

Dem Fachmann steht es frei, geeignete Quellen für Silizium und Metall auszuwählen. Dabei hat er prinzipiell die Auswahl zwischen folgenden Kombinationen: a) die Siliziumquelle und die Metallquelle liegen in flüssiger Form vor, b) die Siliziumquelle liegt als Feststoff vor und die Metallquelle liegt in flüssiger Form vor, c) die Siliziumquelle und die Metallquelle liegen gemeinsam in einem Stoff vor.

Mit "in flüssiger Form" ist hier gemeint, dass die Siliziumquelle und/oder die Metallquelle als Flüssigkeit oder als Lösung vorliegen.

Siliziumquellen, die als Feststoff vorliegen, können beispielsweise aus der Gruppe bestehend aus pyrogen hergestelltes Siliziumdioxid, durch Fällung hergestelltes Siliziumdioxid, durch Sol-Gelprozess hergestelltes Siliziumdioxid und Gemischen davon, ausgewählt werden. Bevorzugt sind dabei ein durch Fällung hergestelltes hochreines Siliziumdioxid oder ein pyrogen hergestelltes Siliziumdioxid.

Ein durch Fällung hergestelltes hochreines Siliziumdioxid ist ein durch Fällung hergestelltes Siliziumdioxid mit einem Gehalt an

    a. Aluminium nicht mehr als 1 ppm
    b. Bor nicht mehr als 0,1 ppm
    c. Calcium nicht mehr als 0,3 ppm
    d. Eisen nicht mehr als 0,6 ppm
    e. Nickel nicht mehr als 0,5 ppm
    f. Phosphor nicht mehr als 0,1 ppm
    g. Titan nicht mehr als 1 ppm
    h. Zink nicht mehr als 0,3 ppm,

wobei die Summe der obengenannten Elemente sowie Natrium und Kalium kleiner als 5 ppm beträgt. Ein solches hochreines Siliziumdioxid kann nach dem in WO 2010/037702 offenbarten Verfahren hergestellt werden. Der Inhalt von WO 2010/037702 wird hier in vollem Umfang durch Bezugnahme in die vorliegende Anmeldung aufgenommen.

Siliziumquelle und Metallquelle können auf verschiedene Arten gemeinsam in einem Stoff vorliegen. Beispiele für derartige Stoffe sind Metall-Silizium-Mischoxide, mit Metalloxid dotiertes Siliziumdioxid, mit Metall imprägniertes Siliziumdioxid, Metallsilikat, mit Metall dotiertes Tetraalkylorthosilikat und Gemische davon. Vorzugsweise sind derartige Stoffe amorph. Bevorzugt ist ein derartiger Stoff dabei ein amorphes mit Metalloxid dotiertes Siliziumdioxid, ein amorphes mit Metall imprägniertes Siliziumdioxid oder ein amorphes Metall-Silizium-Mischoxid.

Ein "Metall-Silizium-Mischoxid" enthält neben $SiO_2$ ein oder mehrere Metalloxide, bevorzugt aus der Reihe $GeO_2$, $In_2O_3$, $Al_2O_3$, $TiO_2$, $B_2O_3$, $SnO_2$, $ZrO_2$ oder $Fe_2O_3$. Metall-Silizium-Mischoxide können mit jeder geeigneten Methode hergestellt werden, z.B. Flammenpyrolyse, Co-Fällung, Sol-Gel-Prozess. Metall-Silizium-Mischoxide sind z.B. aus EP0814058 oder DE102007049742 bekannt.

Ein "mit Metalloxid dotiertes Siliziumdioxid" kann durch jedes bekannte Verfahren hergestellt werden, beispielsweise durch Flammenpyrolyse oder Imprägnierverfahren mit anschließender Kalzination.

Ein "mit Metall imprägniertes Siliziumdioxid" kann durch jedes bekannte Imprägnierverfahren hergestellt werden, beispielsweise durch "incipient wetness"-Verfahren.

In einer bevorzugten Ausführungsform des erfindungsgemäßen Verfahrens liegen in Schritt a) die Komponente (A) und die Komponente (B) gemeinsam in einem Stoff vor und dieser Stoff ist ausgewählt aus der Gruppe bestehend aus amorphes Metall-Silizium-Mischoxid, amorphes mit Metalloxid dotiertes Siliziumdioxid, amorphes mit Metall imprägniertes Siliziumdioxid, Metallsilikat, mit Metall dotiertes Tetraalkylorthosilikat und Gemischen davon. Besonders bevorzugt ist die Komponente (A) dabei ein amorphes mit Metalloxid dotiertes Siliziumdioxid, ein amorphes mit Metall imprägniertes Siliziumdioxid oder ein amorphes Metall-Silizium-Mischoxid.

In einer weiteren bevorzugten Ausführungsform des erfindungsgemäßen Verfahrens liegen in Schritt a) die Komponente (A) als Feststoff und die Komponente (B) in flüssiger Form vor. Besonders bevorzugt ist die Komponente (A) dabei ausgewählt aus der Gruppe bestehend aus pyrogen hergestelltes Siliziumdioxid, durch Fällung hergestelltes Siliziumdioxid, durch Sol-Gelprozess hergestelltes Siliziumdioxid und Gemischen davon. Am meisten bevorzugt ist die Komponente (A) dabei ein durch Fällung hergestelltes hochreines Siliziumdioxid oder ein pyrogen hergestelltes Siliziumdioxid.

Hydrothermalsynthesen für pulverförmige, poröse kristalline Metallsilikate sind an sich bekannt. Dasselbe gilt für die Hydrothermalsynthese von Zeolithen, insbesondere von Metallsilikaliten. Grundsätzlich ist daher der Schritt a) des erfindungsgemäßen Verfahrens nicht auf bestimmte Parameter beschränkt. Vielmehr sind alle dem Fachmann bekannten Edukte und Parameter für Hydrothermalsynthesen von porösen kristallinen Metallsilikaten auch hier geeignet. In Schritt a) des erfindungsgemäßen Verfahrens wird durch Hydrothermalsynthese in einem wässrigen Gemisch enthaltend (A) mindestens eine Siliziumquelle, (B) mindestens eine Metallquelle und (C) mindestens einen Mineralisierer, eine wässrige Suspension erhalten, die ein poröses kristallines Metallsilikat als Reaktionsprodukt enthält. Die Hydrothermalsynthese, auch hydrothermale Kristallzüchtung genannt, stellt eine Kristallisation aus wässrigen Gemischen bei Temperaturen über 100 °C bis etwa 300 °C und erhöhtem Druck bis etwa 100 bar dar. Damit wird die Züchtung aus wässrigen Gemischen für Substanzen verwendbar, die normalerweise schwer löslich sind. Bevorzugt wird Schritt a) des erfindungsgemäßen Verfahrens bei einer Temperatur von 100 bis 250 °C, besonders bevorzugt von 100 bis 200 °C, unter dem dabei erzeugten autogenen Druck (Eigendruck) in einem druckfesten Reaktor, beispielsweise einem Autoklaven, durchgeführt. Der bei der Hydrothermalsynthese in Schritt a) des erfindungsgemäßen Verfahrens sich einstellende Druck kann dabei in einem Bereich von 1,05 bis 50 bar liegen. Bevorzugt liegt der Druck in einem Bereich von 1,5 bis 30 bar, besonders bevorzugt liegt der Druck in einem Bereich von 2 bis 20 bar.

Unter den zuvor genannten Bedingungen des erfindungsgemäßen Verfahrens beträgt die Dauer der Durchführung des Schrittes a) des erfindungsgemäßen Verfahrens herkömmlicherweise weniger als 12 Stunden. Bevorzugt liegt die Durchführungsdauer des Schrittes a) in einem Bereich von 0,1 bis 6 Stunden, besonders bevorzugt liegt sie in einem Bereich von 0,5 bis 4 Stunden.

Als Mineralisierer werden in den meisten Fällen HF oder organische oder anorganische Basen, wie quartäre Ammoniumhydroxide, beispielsweise Tetrapropylammoniumhydroxid oder anorganische Hydroxide, wie Natrium-, Kalium-, Ammonium- oder Calciumhydroxid eingesetzt. Sie können der besseren Auflösung der Silizium- und Metallquellen dienen und das Erreichen des für die Kristallbildung idealen pH-Wertes herbeiführen. Darüber hinaus ist es möglich, auch Verbindungen als Mineralisierer einzusetzen, die Komplexe mit den Metall- und Siliziumquellen ausbilden können. Die Hydrothermalsynthese wird üblicherweise in einem basischen Milieu bei einem pH Wert von über 7 durchgeführt. Bevorzugt liegt der pH-Wert in einem Bereich von 8 bis 14, besonders bevorzugt liegt er in einem Bereich von 9 bis 13. Für eine optimale Durchführung des Schrittes a) des erfindungsgemäßen Verfahrens kann das wässrige Gemisch zusätzlich geeignete Impfkristalle enthalten. Derartige Impfkristalle sind dem Fachmann bekannt.

Bei dem erfindungsgemäßen Verfahren kann das wässrige Gemisch in Schritt a) zusätzlich ein Templat ausgewählt aus der Gruppe bestehend aus Aminen, quartären Ammoniumverbindungen, Alkoholen und Gemischen davon enthalten. Bei einem Templat handelt es sich um eine Verbindung, die durch Aufnahme in das Kristallgitter des Produkts während der Hydrothermalsynthese die Kristallstruktur des gebildeten Metallsilikats bestimmt. Beispiele für geeignete Amine sind: Tri-(n-propyl)amin, Di-(n-propyl)amin, n-Propylamin, Di-(n-butyl)amin, Ethylendiamin, Propanolamin, Ethanolamin, Quinuclidin und dessen substituierte Derivate, Ammoniak, Ammoniumsalze, Morpholin, 1,5-Diaminopentan, 1,6-Diaminohexan, Dipropylentriamin, Dihexamethylentriamin, Triethylentetramin, Diethylentriamin, 1-Alkyl-4-azobicylco[2,2,2]oktan-4-oxidhalogenide. Beispiele für geeignete Alkohole sind: Glycerin, Hexandiol, Pentandiol. Besonders bevorzugt werden Tetraalkylammoniumverbindungen wie Tetraalkylammoniumhydroxide, insbesondere Tetra-n-propylammoniumhydroxid (TPAOH), beispielsweise zur Herstellung von Titansilikalit-1 (MFI-Struktur), Tetra-n-butylammoniumhydroxid, beispielsweise zur Herstellung von Titansilikalit-2 (MEL-Struktur) und Tetraethylammoniumhydroxid, eingesetzt. Die quartären Ammoniumverbindungen werden vorzugsweise als wässrige Lösungen eingesetzt. Das molare Verhältnis von in Schritt a) des erfindungsgemäßen Verfahrens eingesetzte Templatmenge zur eingesetzten Siliziummenge ist prinzipiell nicht limitiert. Vorzugsweise gilt 0,12 ≤ mol Templat / mol Silizium < 0,20.

Der Begriff "Flammensprühpyrolyse" (auch Flammenspraypyrolyse) ist dem Fachmann gut bekannt und bezieht sich auf ein Verfahren zur thermischen oxidativen Umsetzung eines durch Versprühen im Gasstrom fein verteilten flüssigen Rohstoffes oder einer Suspension in einer durch Verbrennung eines Brennstoffes in Gegenwart von Sauerstoff erzeugten Flamme. Flammensprühpyrolyse ist ein etabliertes Verfahren zur Herstellung von Metalloxiden, das beispielsweise in WO 2017/001366 A1 und US 2002/0041963 A1 beschrieben ist. So wird beispielsweise in WO 2017/001366 A1 ein solches Verfahren zur Herstellung von Metalloxidpulvern mittels Flammensprühpyrolyse offenbart, bei dem man ein Siloxan enthaltendes Aerosol in einem Reaktor direkt in die Flamme einbringt und dort zu Siliziumdioxid umsetzt. Als in Schritt b) des erfindungsgemäßen Verfahrens eingesetzte Brennstoff kommen beispielsweise Wasserstoff, Methan, Ethan, Propan, Butan, Erdgas und Gemische davon in Frage. Diese werden bevorzugt in einem gasförmigen Zustand dem für die Durchführung des Schrittes b) geeigneten Reaktor zugeführt.

Der Sauerstoff kann in Form jedes sauerstoffhaltigen Gases zugeführt werden. Vorzugsweise wird Luft eingesetzt.

Die adiabate Verbrennungstemperatur ist ein in der Fachwelt gängiger Parameter zur Charakterisierung des Verbrennungsprozesses mindestens eines Brennstoffes und eines Oxidanten, deren Zustand vor Beginn der Verbrennung bekannt ist. Dementsprechend kann die adiabate Verbrennungstemperatur, beispielsweise in einem entsprechenden Reaktor aus den bekannten Verfahrensparameter wie Vorheiztemperaturen, Massenströme und andere auf eine dem Fachmann bekannte Weise ausgerechnet werden.

Die adiabate Verbrennungstemperatur während der Durchführung des Schrittes b) des erfindungsgemäßen Verfahrens liegt in einem Bereich von 450 bis 2200 °C. Besonders bevorzugt liegt die adiabate Verbrennungstemperatur in einem Bereich von 450 bis 1600 °C, mehr bevorzugt ist in ein Bereich von 500 bis 1400 °C, weiter bevorzugt ist ein Bereich von 500 bis 1200 °C, weiter bevorzugt ist ein Bereich von 550 bis 1000 °C, ganz besonders bevorzugt ist ein Bereich von 600 bis 900 °C.

Die in der Flamme tatsächlich erzeugte Temperatur variiert je nach deren Messstelle in einem relativ breiten Bereich. So kann in Schritt b) des erfindungsgemäßen Verfahrens die Temperatur gemessen 1,5 m unterhalb der Zündstelle mindestens 300 °C betragen, bevorzugt liegt die Temperatur 1,5 m unterhalb der Zündstelle in einem Bereich von 400 bis 800 °C.

Die mittlere Verweilzeit der in Schritt a) erhaltenen Suspension im Reaktor für die Durchführung des Schrittes b) kann von 1 ms bis 100 s betragen. Bevorzugt liegt die mittlere Verweilzeit in einem Bereich von 0,1 bis 10 s, besonders bevorzugt liegt sie einem Bereich von 0,5 bis 5 s. Die Berechnung der oben genannten mittleren Verweilzeit im Reaktor ($<t>$, [s]) wird anhand von dem Reaktor pro Zeiteinheit zugeführtem Gesamtvolumen an Gas ($V_t$, [$Nm^3/s$]) und Reaktorvolumen ($V_R$, [$m^3$]) durchgeführt:

$$<t> = V_R/v_t$$

Die oben genannten Temperaturen und die mittlere Verweilzeit in Schritt b) des erfindungsgemäßen Verfahrens werden vorzugsweise so ausgewählt, dass in diesem Schritt die oxidative Zersetzung des organischen Templats stattfindet, aber die erhaltene poröse Struktur des Produktes durch zu hohe Temperaturen nicht beschädigt wird. Stellt man also eine höhere Flammentemperatur ein, die bei einer dauerhaften Anwendung zur irreversiblen Veränderungen der Porenstruktur eines Metallsilikats führen könnte, so ist es vorteilhaft eine kürzere Verweilzeit in der Flamme zu wählen.

Der Feststoffgehalt $W_{FT}$ (Gew.-%) der in Schritt a) erhaltenen wässrigen Suspension kann aus der gesamten Masse dieser Suspension (Ms) und der Masse an Wasser in dieser Suspension ($M_{H2O}$) berechnet werden:

$$w_{FT} = (M_S-M_{H2O})/M_S*100\%$$

Der Feststoffgehalt der in Schritt a) erhaltenen Suspension beträgt $\leq$ 70 Gew.-%. Bevorzugt liegt der Feststoffgehalt in einem Bereich von 10 bis 70 Gew.-%, besonders bevorzugt liegt er in einem Bereich von 10 bis 60 Gew.-%, ganz besonders bevorzugt liegt er in einem Bereich von 20 bis 50 Gew.-%. Ein höherer Feststoffgehalt als 70 Gew.-% würde die Versprühung und Flammensprühpyrolyse in Schritt b) des erfindungsgemäßen Verfahrens technisch erschweren, während ein geringerer Feststoffgehalt als 10 Gew.-% wegen einer zu hohen zu verdampfenden Wassermenge die Wirtschaftlichkeit des Verfahrens negativ beeinflussen würde. Dem Fachmann sind Methoden zur Einstellung des Feststoffgehalts bekannt, so können beispielsweise die Edukte in einer geeigneten Konzentration eingesetzt werden oder die Suspension kann entsprechend verdünnt werden.

Der mittlere Partikeldurchmesser (d50) der in Schritt a) des erfindungsgemäßen Verfahrens erhaltenen Metallsilikatpartikel in der wässrigen Dispersion ist bevorzugt kleiner als 500 nm und besonders bevorzugt kleiner als 400 nm. Der mittlere Partikeldurchmesser der Metallsilikatpartikel kann dabei beispielsweise mittels dynamischer Laserlichtstreuung (engl.: dynamic laser light scattering, DLS) bestimmt werden.

Unter Glühverlust (in Gew.-%) wird nach DIN 18128:2002-12 der Anteil an organischen Substanzen in einer Probe definiert. Durch die Veraschung erfolgt die Entfernung des organischen Anteils in der Probe, dabei wird beispielsweise der enthaltene Kohlenstoff oxidiert und entweicht als Kohlendioxid. Der Glühverlust nach DIN 18128:2002-12 des nach dem erfindungsgemäßen Verfahren erhaltenen pulverförmigen, porösen kristallinen Metallsilikats beträgt vorzugsweise weniger als 5 Gew.-%, besonders bevorzugt weniger als 3 Gew.-%, ganz besonders bevorzugt weniger als 2 Gew.-%.

Wird ein Templat eingesetzt, so findet in Schritt b) des erfindungsgemäßen Verfahrens bevorzugt mindestens eine partielle thermische und/oder oxidative Zersetzung des Templats statt. Besonders bevorzugt wird dabei das eingesetzte Templat zu mehr als 70 %, ganz besonders bevorzugt zu mehr als 90 %, zersetzt.

Die nach dem erfindungsgemäßen Verfahren erhaltenen pulverförmigen, porösen kristallinen Metallsilikate können eine spezifische Oberfläche von $\geq$ 20 $m^2/g$ aufweisen, bevorzugt von 30 bis 800 $m^2/g$, besonders bevorzugt von 50 bis 700 $m^2/g$, ganz besonders bevorzugt von 70 bis 600 $m^2/g$. Die spezifische Oberfläche, auch vereinfacht BET - Oberfläche genannt, wird nach DIN 9277:2014 durch Stickstoffadsorption nach dem Brunauer-Emmett-Teller-Verfahren bestimmt. Das desorbierte, kumulierte Stickstoffporenvolumen wird nach BJH (BARRETT, JOYNER und HALENDA, Journal of the American Chemical Society, 73:373-380, 1951) errechnet.

Durch das erfindungsgemäße Verfahren werden poröse kristalline Metallsilikate in Pulverform erhalten. Für ihre Anwendung als Oxidationskatalysatoren können sie wahlweise durch bekannte Verfahren zur Verformung von Pulverkatalysatoren wie beispielsweise Kompaktierung, Granulation, Sprühtrocknen, Sprühgranulation oder Extrusion in eine zur Anwendung geeignete Form wie beispielsweise Mikrogranulate, Kugeln, Tabletten, Vollzylinder, Hohlzylinder oder Wabenkörper gebracht werden.

In einer weiteren Ausführungsform des erfindungsgemäßen Verfahrens wird nach Schritt b) eine Verformung c) durchgeführt, umfassend die Schritte

(1) Zugabe von Wasser unter Erhalt einer wässrigen Suspension des porösen kristallinen Metallsilikats,

(2) Mischen der Suspension aus Schritt (1) mit Granulationshilfsmitteln,

(3) Kompaktierung, Granulation, Sprühtrocknen, Sprühgranulation oder Extrusion unter Erhalt eines porösen kristallinen Metallsilikats in Form von Mikrogranulaten, Kugeln, Tabletten, Vollzylindern, Hohlzylindern oder Wabenkörpern.

Die Partikelgröße solcher Formkörper liegt vorzugsweise in einem Bereich von 0,1 bis 10 mm.

Es können für die Mischung und Verformung alle bekannten Misch- und Verformungsvorrichtungen beziehungsweise -verfahren verwendet werden und alle gängigen Granulationshilfsmittel eingesetzt werden. Derartige bekannte Verformungsvorrichtungen werden beispielsweise in Ullmann's Enzyklopädie der Technischen Chemie, 4. Auflage, Band 2, Seite 295 ff., 1972 beschrieben. Bevorzugt werden Ein- und Zweischneckenextruder oder eine Strangpresse eingesetzt. Dabei können zahlreiche bekannte Geometrien, wie zum Beispiel Vollzylinder, Hohlzylinder, Sterne usw. hergestellt werden. Möglich ist jedoch auch die Herstellung von Wabenkörpern.

Die in Schritt a) des erfindungsgemäßen Verfahrens erhaltene wässrige Suspension wird während der Durchführung des Schrittes b) versprüht, das heißt im umgebenden Gas fein verteilt und bildet somit ein Aerosol, ein dreiphasiges Feststoff-/Flüssig-/Gasgemisch bestehend aus Gas mit darin feinverteilter Flüssigkeitstropfen, die ihrerseits Feststoffpartikel umfassen. Das für die Versprühung der wässrigen Suspension eingesetzte Gas kann Sauerstoff und/oder mindestens einen der zuvor aufgelisteten Brennstoffe und/oder mindestens ein Inertgas, beispielsweise Stickstoff, enthalten. Bevorzugt wird für die Versprühung $N_2$, $H_2$ oder Luft eingesetzt, wobei Luft besonders bevorzugt ist.

Das bei der Versprühung der wässrigen Suspension in Schritt a) gebildete Aerosol weist bevorzugt Flüssigkeitstropfen mit einem nummerischen mittleren Tropfendurchmesser von nicht mehr als 2 mm, besonders bevorzugt von nicht mehr als 1 mm, ganz besonders bevorzugt von nicht mehr als 0,5 mm auf. Eine solche nummerische mittlere Partikelgröße der Flüssigkeitstropfen in Aerosol kann beispielsweise von einem Fachmann berechnet werden und ergibt sich aus den Abmessungen der eingesetzten Geräte, entsprechenden Strömungsgeschwindigkeiten, Flüssigkeit- und Gaseigenschaften und anderen Parameter. Alternativ kann die nummerische mittlere Partikelgröße des in Schritt a) gebildeten Aerosols mittels Laserbeugungsmethode direkt gemessen werden. Dabei wird aus der resultierenden gemessenen Tropfengrößenverteilung der Mittelwert $d_{50}$, der wiedergibt, welche Tropfengroße 50 % aller Partikeln nicht übersteigt, als nummerische mittlere Partikelgröße definiert.

Die in Schritt b) des erfindungsgemäßen Verfahrens stattfindende Versprühung der wässrigen Suspension kann mittels unterschiedlicher, dem Fachmann für diesen Zweck bekannten Apparate und Geräte erreicht werden. Beispielsweise können dabei Scheibenzerstäuber, Rotationszerstäuber, Ultraschallzerstäuber, Einstoff-, Zweistoff- oder Mehrstoffdüsen sowie verschiedene Injektorsysteme oder ähnliche Systeme verwendet werden. Bevorzugt wird die wässrige Suspension in Schritt b) des erfindungsgenmäßen Verfahrens über mindestens eine Düse in die Flamme versprüht.

Der in Schritt b) des erfindungsgemäßen Verfahrens eingesetzte Sauerstoff kann an mehreren Stellen dem Flammensprühpyrolyse-Reaktor zugeführt werden. So kann die eingesetzte Suspension in einem ersten Gasstrom enthaltend Luft, versprüht werden, während die Hauptmenge an Luft (Primärluft) als ein zweiter Gasstrom der Flamme parallel zur Fließrichtung der zugeführten versprühten Suspension zugeführt wird und ein dritter Gasstrom (Sekundärluft), beispielsweise zur Vermeidung von Materialablagerungen, tangential (senkrecht zur Fließrichtung der zugeführten versprühten Suspension) zugeführt werden kann. Genauso kann es vorteilhaft sein, den Brennstoff an mehreren Stellen dem Reaktor zuzuführen, beispielsweise ein Hauptstrom (Primär-Brennstoffstrom) zusammen mit dem Primärluftstrom und ein Nebenstrom (Sekundär-Brennstoffstrom, Mantelbrennstoff) zum Beispiel zur Stabilisierung der erzeugten Flamme.

Es ist besonders vorteilhaft, wenn bei der Durchführung des Schrittes b) des erfindungsgemäßen Verfahrens die Menge an Sauerstoff im Vergleich zu der Gesamtmenge aller brennbaren Bestandteile des Reaktionsgemisches im Überschuss vorliegt. Als Reaktionsgemisch wird dabei die in Schritt b) umgesetzte Suspension zusammen mit den in Schritt b) eingesetzten gasförmigen Komponenten verstanden. Zu den brennbaren Bestandteilen dieses Reaktionsgemisches gehören beispielsweise die eingesetzten Brennstoffe und Template. Die Kennzahl λ (lambda) ist das Verhältnis der im Reaktionsgemisch vorhandenen Sauerstoffmenge, dividiert durch die für die vollständige Verbrennung aller brennbaren Bestandteile des Reaktionsgemisches notwendige Sauerstoffmenge, jeweils in mol/h. Bevorzugt wird λ von 1 bis 10 eingestellt, besonders bevorzugt wird λ von 2 bis 6 gewählt.

Der für die Durchführung des Schrittes b) des erfindungsgemäßen Verfahrens eingesetzte Brennstoff und Sauerstoff, können vorerhitzt eingebracht werden. Ein geeigneter Temperaturbereich ist dabei von 50 bis 400 °C. Die in Schritt a) des erfindungsgemäßen Verfahrens erzeugte Suspension kann auch auf eine Temperatur von 50 bis 300 °C vorgeheizt in die Flamme eingebracht werden. Besonders bevorzugt kann diese Suspension direkt nach der Herstellung in Schritt a) ohne Abkühlung in Schritt b) eingesetzt werden.

Das Verhältnis von in Schritt b) insgesamt eingesetztem Gasvolumen in Normkubikmeter zur Menge des eingesetzten wässrigen Suspension in kg beträgt bevorzugt von 0,1 bis 100 $Nm^3$/kg, besonders bevorzugt von 0,5 bis 50 $Nm^3$/kg, ganz besonders bevorzugt von 1 bis 10 $Nm^3$/kg.

Durch das erfindungsgemäße Verfahren können besonders bevorzugt titanhaltige Zeolithe vom Typ Titansilikalit-1 und Titansilikalit-2 erhalten werden, die als Katalysatoren bei Oxidationsreaktionen mit Wasserstoffperoxid eingesetzt werden können. Insbesondere können solche titanhaltigen Zeolithe als Katalysatoren bei der Epoxidierung von Olefinen mittels wässrigem Wasserstoffperoxid verwendet werden.

**Beispiele**

**Beispiel 1: Herstellung der Rohsuspension durch Hydrothermalsynthese**

Die Synthese des Titan-Silikalit-1 Zeoliths (TS-1; Strukturtyp MFI) wurde in einem 3 $m^3$ Druckreaktor durchgeführt und erfolgte in Anlehnung an die entsprechende Vorschrift aus Beispiel 1 von EP 0814058 B1. Als Siliziumquelle diente ein amorphes, hochreines Siliziumdioxid (Hersteller: Evonik Industries) und als Titanquelle diente eine wässrige Titan-Tetrapropylammoniumhydroxid-Lösung (Ti-TPA-Lösung) mit einem Gehalt von 19,0 Gew.-% $TiO_2$. Die Ti-TPA-Lösung wurde wie folgt hergestellt:

Mischung von 90,1 kg deionisiertes Wasser, 167,3 kg einer 40 %-igen wässrigen Tetrapropylammoniumhydroxid-Lösung (Hersteller: Sachem) und 141,6 kg Tetraethylorthotitanat (Hersteller: Connect Chemicals GmbH) für eine Stunde bei 40 °C in einem geschlossenen Behälter. Durch die Exothermie der Reaktion kam es zu einem Temperaturanstieg von ca. 25 °C. Danach erfolgte die Abdestillation des entstandenen Ethanols bei 80 °C mit einer Destillationsgeschwindigkeit von 30 l/h. Zielwert für die entstehende Ti-TPA-Lösung war ein $TiO_2$-Gehalt von 19,0 Gew%. Die Ti-TPA-Lösung wurde nach dem Abkühlen in der TS-1 Synthese eingesetzt.

In den Druckreaktor wurden vorgelegt: 500 kg hochreines Siliziumdioxid (Evonik Industries), 382 kg einer 40 %-igen wässrigen Tetrapropylammoniumhydroxid-Lösung (Hersteller: Sachem), 193 kg Ti-TPA-Lösung, 10 kg Silikalit-1 Impfkristalle und 1800 kg deionisiertes Wasser. Es wurde bei einer Rührgeschwindigkeit von 50 U/min für 3 h bei 170 °C im geschlossenen Druckreaktor gerührt. Die Aufheizzeit auf 170 °C betrug 180 min; nach 150 min Abkühlzeit wurde die Synthese beendet. Die Rührung bei einer Rührgeschwindigkeit von 50 U/min wurde vom Anfang bis zum Ende der Synthese fortgeführt.

Die Silikalit-1 Impfkristalle wurden durch hydrothermale Synthese von 500 kg hochreinem Siliziumdioxid (Evonik Industries), 400 kg einer 40 %-igen wässrigen Tetrapropylammoniumhydroxid-Lösung (Hersteller: Sachem) und 1800 kg deionisiertem Wasser in einem Druckreaktor hergestellt. Es wurde bei einer Rührgeschwindigkeit von 50 U/min für 3 h bei 160 °C im geschlossenen Druckreaktor gerührt. Die Aufheizzeit auf 160 °C betrug 180 min; nach 150 min Abkühlzeit wurde die Synthese beendet. Die Rührung bei einer Rührgeschwindigkeit von 50 U/min wurde vom Anfang bis zum Ende der Synthese fortgeführt.

**Vergleichsbeispiel 1: Herkömmliche Aufarbeitung nach der Hydrothermalsynthese**

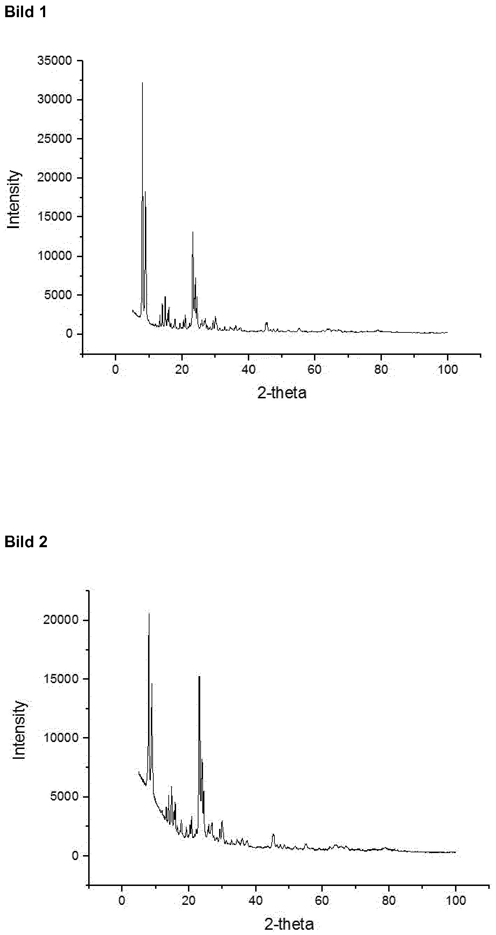

Zur in Beispiel 1 beschriebenen Rohsuspension wurde Essigsäure (60 Gew.-%) bis pH = 7 zugegeben, und der gebildete Niederschlag wurde auf einer Filterpresse abfiltriert und mit destilliertem Wasser gewaschen. Der erhaltende Feststoff wurde über Sprühtrocknung mit einer Eintrittstemperatur von 420 °C und mit einer Zerstäuber-Drehzahl von 1700 $min^{-1}$ (Austrittstemperatur von 110 °C) getrocknet. Anschließend wurde das angetrocknete Pulver 2 h bei maximal 650 °C im Drehrohr kalziniert. Das so erhaltene Produkt wies eine BET - Oberfläche von 470 $m^2$/g und einen Glühverlust (gemessen bei 550 °C) von 0,65 % auf. XRD Analyse (Bild 1) zeigte, dass das Produkt die Kristallstruktur von TS-1 (ICDD Referenzcode: 01-089-8099) aufweist. Die Porenanalyse mit Stickstoff nach BJH ergab ein Porenvolumen von 0,23 ml/g.

**Beispiel 2: Sprühkalzination nach der Hydrothermalsynthese (600°C)**

Die in Beispiel 1 beschriebene Rohsuspension (16 kg/h) wurde auf einer Pilotanlage mit 18 $m^3$/h Stickstoff zur Zerstäubung über eine Zweistoffdüse mit 2 mm Innendurchmesser und 1 mm Spalt versprüht. Die Wasserstoff/Luft Flamme wurde mit 10 $m^3$/h Wasserstoff und 45 $m^3$/h Primärluft betrieben. Zur Vermeidung von Materialablagerungen wurde tangential 25 $m^3$/h Sekundärluft eingedüst. Die Temperatur gemessen 1,5 m unterhalb der Zündstelle wurde durch leichte Variation des Wasserstoffs auf 600 °C eingestellt. Die adiabate Verbrennungstemperatur im Reaktor betrug ca. 680 °C. Die Verweilzeit im Reaktor betrug ca. 1,1 s. Die Abgase, inklusive kalziniertes Zeolith, wurden durch eine Kühlstrecke mit einem Durchmesser von 100 mm und einer Länge von 6 m mit Wasserkühlung (Kühlmitteltemperatur: 25 °C) geleitet und anschließend an Filterkerzen bei max. 250 °C gesammelt. Durch sequentielle Abreinigung der Filterkerzen konnte das fertig kalzinierte Produkt (4,35 kg/h) aufgesammelt werden. Das so erhaltene Produkt wies eine BET Oberfläche von 499 $m^2$/g und einen Glühverlust (gemessen bei 550 °C) von 1,35 % auf. XRD Analyse (Bild 2) zeigte, dass das Produkt die Kristallstruktur von TS-1 (ICDD Referenzcode: 01-089-8099) aufweist. Die Porenanalyse mit Stickstoff nah BJH ergab ein Porenvolumen von 0,3 ml/g.

**Vergleichsbeispiel 2 (Negativbeispiel): Sprühkalzination nach der Hydrothermalsynthese (400 °C)**

Die in Beispiel 1 beschriebene Rohsuspension (15 kg/h) wurde auf einer Pilotanlage mit 18 $m^3$/h Stickstoff zum Zerstäuben über eine Zweistoffdüse mit 2 mm Innendurchmesser und 1 mm Spalt versprüht. Die Wasserstoff/Luft Flamme wurde mit 8 $m^3$/h Wasserstoff und 45 $m^3$/h Primärluft betrieben. Die Temperatur gemessen 1,5 m unterhalb der Zündstelle wurde durch leichte Variation des Wasserstoffs auf 400 °C eingestellt. Die adiabate Verbrennungstemperatur im Reaktor betrug ca. 544 °C. Die Verweilzeit im Reaktor betrug 1,35 s. Die Abgase, inklusive kalziniertes Zeolith, wurden durch eine Kühlstrecke mit einem Durchmesser von 100 mm und einer Länge von 6 m mit Wasserkühlung (Kühlmitteltemperatur: 25 °C) geleitet und anschließend an Filterkerzen bei max. 250 °C gesammelt. Durch sequentielle Abreinigung der Filterkerzen konnte das fertig kalzinierte Produkt (4,4 kg/h) aufgesammelt werden. Das so erhaltene Produkt wies eine BET - Oberfläche von 240 $m^2$/g und einen Glühverlust (gemessen bei 550 °C) von 9,0 % auf. Das erhaltene Produkt ist wegen des hohen Glühverlustes ungeeignet für eine Weiterverarbeitung zum Endprodukt und den Einsatz in der HPPO-Testreaktion.

**Beispiel 3: Sprühkalzination nach der Hydrothermalsynthese (700 °C)**

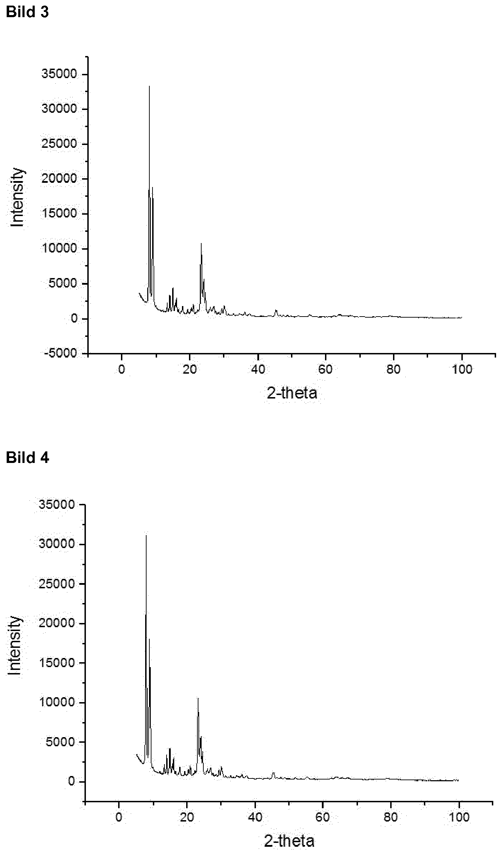

Die in Beispiel 1 beschriebene Rohsuspension (30 kg/h) wurde auf einer Pilotanlage mit 18 $m^3$/h Luft zur Zerstäubung über eine Zweistoffdüse mit 2 mm Innendurchmesser und 1 mm Spalt versprüht. Die Wasserstoff/Luft Flamme wurde mit 9,1 $m^3$/h Wasserstoff und 27 $m^3$/h Primärluft betrieben. Die Temperatur gemessen 1,5 m unterhalb der Zündstelle wurde durch leichte Variation des Wasserstoffs auf 700 °C eingestellt. Die adiabate Verbrennungstemperatur im Reaktor betrug ca. 750 °C. Die Verweilzeit im Reaktor betrug ca. 1,1 s. Die Abgase, inklusive kalziniertes Zeolith, wurden durch eine Kühlstrecke mit einem Durchmesser von 100 mm und einer Länge von 6 m mit Quenchgaskühlung (10 l/h $H_2O$, 4 $m^3$/h Luft) geleitet und anschließend an Filterkerzen bei max. 250 °C gesammelt. Durch sequentielle Abreinigung der Filterkerzen konnte das fertig kalzinierte Produkt (8,7 kg/h) aufgesammelt werden. Das so erhaltene Produkt wies eine BET - Oberfläche von 506 $m^2$/g und einen Glühverlust (gemessen bei 550 °C) von 1,1 % auf. XRD Analyse (Bild 3) zeigte, dass das Produkt die Kristallstruktur von TS-1 (ICDD Referenzcode: 01-089-8099) aufweist. Die Porenanalyse mit Stickstoff nach BJH ergab ein Porenvolumen von 0,3 ml/g.

**Beispiel 4: Sprühkalzination nach der Hydrothermalsynthese (800 °C)**

Die in Beispiel 1 beschriebene Rohsuspension (14 kg/h) wurde auf einer Pilotanlage mit 18 $m^3$/h Stickstoff zum Zerstäuben über eine Zweistoffdüse mit 2 mm Innendurchmesser und 1 mm Spalt versprüht. Die Wasserstoff/Luft Flamme wurde mit 12,2 $m^3$/h Wasserstoff und 40 $m^3$/h Primärluft betrieben. Die Temperatur gemessen 1,5 m unterhalb der Zündstelle wurde durch leichte Variation des Wasserstoffs auf 800 °C eingestellt. Die adiabate Verbrennungstemperatur im Reaktor betrug ca. 830 °C. Die Verweilzeit im Reaktor betrug 0,85 s. Die Abgase, inklusive kalziniertes Zeolith, wurden durch eine Kühlstrecke Kühlstrecke mit einem Durchmesser von 100 mm und einer Länge von 6 m mit Wasserkühlung (Kühlmitteltemperatur: 25 °C) geleitet und anschließend an Filterkerzen bei max. 250 °C gesammelt. Durch sequentielle Abreinigung der Filterkerzen konnte das fertig kalzinierte Produkt (4,2 kg/h) aufgesammelt werden. Das so erhaltene Produkt wies eine BET - Oberfläche von 477 $m^2$/g und einen Glühverlust (gemessen bei 550 °C) von 0,87 % auf. XRD Analyse (Bild 4) zeigte, dass das Produkt die Kristallstruktur von TS-1 (ICDD Referenzcode: 01-089-8099) aufweist. Die Porenanalyse mit Stickstoff nach BJH ergab ein Porenvolumen von 0,3 ml/g.

**Vergleichsbeispiel 3: Verformung des Zeolithpulvers aus Vergleichsbeispiel 1**

Das Pulver aus Vergleichsbeispiel 1 (1200 g) wurde mit 75 g Methylhydroxyethylcellulose (Tylose MH1000), 75 g Licowax C, 1000 g Kieselsollösung (Köstrosol 0830 AS) und 350 g de-ionisiertem Wasser in einem Eirich-Mischer gemischt. Die erhaltene Masse wurde mit einem Extruder (HB-Feinmechanik LTW 63) durch eine Lochplatte mit Durchmesser 3,2 mm extrudiert. Die Extrudate wurden anschließend in einem Trockenschrank bei 80 °C für eine Stunde getrocknet und in einem Muffelofen bei 570 °C für 12 h kalziniert.

**Beispiel 5: Verformung des Zeolithpulvers aus Beispiel 2**

Das Pulver aus Beispiel 2 (1200 g) wurde mit 75 g Methylhydroxyethylcellulose (Tylose MH1000), 75 g Licowax C, 1000 g Kieselsollösung (Köstrosol 0830 AS) und 350 g de-ionisiertem Wasser in einem Eirich-Mischer gemischt. Die erhaltene Masse wurde mit einem Extruder (HB-Feinmechanik LTW 63) durch eine Lochplatte mit Durchmesser 3,2 mm extrudiert. Die Extrudate wurden anschließend in einem Trockenschrank bei 80 °C für eine Stunde getrocknet und in einem Muffelofen bei 570 °C für 12 h kalziniert.

**Beispiel 6: katalytischer Test mit dem Katalysator aus Vergleichsbeispiel 3**

Die Epoxidierung von Propen mittels Wasserstoffperoxid (60 %) erfolgte über zwei Festbettreaktoren, die jeweils 9 g Katalysator aus dem Vergleichsbeispiel 3 in Form von Extrudaten enthielten. Die Reaktoren waren dabei in Reihe (Reaktor 1 → Reaktor 2) angeordnet und wurden im Aufwärtsstrom betrieben. Der erste Einsatzstrom mit einem Gesamtfluss von 20 g/h bestehend aus Methanol, Wasserstoffperoxid und Wasser und ein zweiter Einsatzstrom bestehend aus 20 g/h Propen wurden beide dem ersten Reaktor zugeführt. Der Reaktionsdruck wurde durch ein Druckhalteventil nach dem zweiten Reaktor bei 25 bar gehalten. Das aus dem zweiten Festbettreaktor austretende Reaktionsgemisch wurde auf Umgebungsdruck entspannt. Die resultierende Gasphase wurde auf Propen, Propylenoxid und Sauerstoff analysiert und die resultierende flüssige Phase auf Propylenoxid und Wasserstoffperoxid analysiert. Die anfängliche Selektivität zu Propylenoxid nach 23 h Reaktionslaufzeit betrug 91,1 %. Nach 480 h betrug die Selektivität zu Propylenoxid 97,7 %.

**Beispiel 7: katalytischer Test mit dem Katalysator aus Beispiel 5**

Die katalytische Epoxidierung von Propen erfolgte nach Beispiel 6, nur mit dem in Beispiel 5 hergestellten Katalysator.

Die anfängliche Selektivität zu Propylenoxid nach 25 h Reaktionslaufzeit betrug 93,5 %. Nach 480 h betrug die Selektivität zu Propylenoxid 98,6 %.

**Tabelle 1: Vergleich der Ergebnisse von katalytischen Testreaktionen**

|  | S(PO), % nach 480h | Raum-Zeit-Ausbeute, kg PO/kg Kat-h |
|---|---|---|
| Beispiel 6: Konventionell hergestellter Katalysator (Vergleichsbeispiel 3) | 97,7 | 0,21 |
| Beispiel 7: Erfindungsgemäßer Katalysator (Beispiel 5) | 98,6 | 0,21 |

Wie die Beispiele 2-4 im Vergleich zu Vergleichsbeispiel 1 zeigen, enthält das erfindungsgemäße Verfahren deutlich weniger Prozessschritte als das herkömmliche Verfahren. Außerdem entfällt dabei die Entsorgungsproblematik der Abwässer, die üblicherweise während der Filtration und Reinigung des Produktes nach der Hydrothermalsynthese entstehen. Überraschenderweise weisen die erhaltenen Titansilikalite nach der Flammenspühpyrolyse eine mit dem herkömmlich hergestellten Titansilikalit vergleichbare Porosität auf.

Wie aus den Beispielen 6 und 7 sowie aus der Tabelle 1 ersichtlich ist, sind sowohl der herkömmlich hergestellte Katalysator (Vergleichsbeispiel 3) als auch der Katalysator, der aus dem erfindungsgemäß hergestellten Metallsilikat erhalten wurde (Beispiel 5), nach 480 h Betriebszeit in der Epoxidierung von Propylen zu Propylenoxid (PO) hochaktiv und selektiv. Der Katalysator, der aus dem erfindungsgemäß hergestellten Metallsilikat erhalten wurde, zeigt sogar eine um 0,9 % höhere Selektivität zu Propylenoxid bei vergleichbarer Raum-Zeit-Ausbeute als der herkömmliche Katalysator. Somit lässt sich mit einem Katalysator, der aus einem erfindungsgemäß hergestellten Titansilikalit erhalten wurde, bezogen auf Zeiteinheit und Reaktorvolumen die Produktausbeute an Propylenoxid deutlich steigern.

**Kristallografische Daten von Titansilikalit-1 (Quelle: ICDD-Datenbank)**

Referenzcode: 01-089-8099

Name der Verbindung: Silizium-Titan-Oxid

ICSD-Code: 88413

Referenz: Lamberti, C., Bordiga, S., Zecchina, A., Carati, A., Fitch, A.N., Artioli, G., Petrini, G., Salvalaggio, M., Marra, G.L., J. Catal., 183, 222, (1999)

Liste der Reflexe:

| Nummer | h | k | l | d [A] | 2θ [°] | I[%] |
|--------|---|---|---|---------|--------|-------|
| 1 | 0 | 1 | 1 | 11,17140 | 7,908 | 100,0 |
| 2 | 1 | 0 | 1 | 11,17140 | 7,908 | 100,0 |
| 3 | 2 | 0 | 0 | 10,07340 | 8,771 | 33,7 |
| 4 | 0 | 2 | 0 | 9,97825 | 8,855 | 36,2 |
| 5 | 1 | 1 | 1 | 9,74800 | 9,065 | 17,1 |
| 6 | 2 | 1 | 0 | 8,99270 | 9,828 | 1,3 |
| 7 | 2 | 0 | 1 | 8,05720 | 10,972 | 0,5 |
| 8 | 1 | 2 | 1 | 7,44190 | 11,882 | 1,1 |
| 9 | 2 | 1 | 1 | 7,44190 | 11,882 | 1,1 |
| 10 | 2 | 2 | 0 | 7,08909 | 12,476 | 0,3 |
| 11 | 0 | 0 | 2 | 6,71210 | 13,180 | 4,1 |
| 12 | 1 | 0 | 2 | 6,36799 | 13,896 | 8,3 |
| 13 | 1 | 1 | 2 | 6,06662 | 14,589 | 1,0 |
| 14 | 3 | 0 | 1 | 6,00599 | 14,738 | 9,2 |
| 15 | 0 | 3 | 1 | 5,96048 | 14,851 | 6,0 |
| 16 | 1 | 3 | 1 | 5,71559 | 15,491 | 5,5 |
| 17 | 0 | 2 | 2 | 5,58570 | 15,853 | 5,7 |
| 18 | 2 | 0 | 2 | 5,58570 | 15,853 | 5,7 |
| 19 | 2 | 1 | 2 | 5,36799 | 16,501 | 1,9 |
| 20 | 1 | 2 | 2 | 5,36799 | 16,501 | 1,9 |
| 21 | 2 | 3 | 1 | 5,14575 | 17,219 | 0,8 |
| 22 | 3 | 2 | 1 | 5,14575 | 17,219 | 0,8 |
| 23 | 4 | 0 | 0 | 5,03670 | 17,594 | 2,4 |
| 24 | 0 | 4 | 0 | 4,98912 | 17,764 | 3,4 |
| 25 | 4 | 1 | 0 | 4,88356 | 18,151 | 0,4 |
| 26 | 2 | 2 | 2 | 4,88356 | 18,151 | 0,4 |
| 27 | 4 | 0 | 1 | 4,71570 | 18,803 | 0,1 |
| 28 | 3 | 1 | 2 | 4,61852 | 19,202 | 2,4 |
| 29 | 1 | 4 | 1 | 4,55547 | 19,470 | 0,3 |
| 30 | 4 | 2 | 0 | 4,49635 | 19,729 | 0,2 |
| 31 | 2 | 4 | 0 | 4,45787 | 19,901 | 0,5 |
| 32 | 3 | 3 | 1 | 4,45787 | 19,901 | 0,5 |
| 33 | 0 | 1 | 3 | 4,36632 | 20,322 | 3,0 |
| 34 | 1 | 0 | 3 | 4,36632 | 20,322 | 3,0 |

(fortgesetzt)

| Nummer | h | k | l | d [A] | 2θ [°] | I[%] |
|---|---|---|---|---|---|---|
| 35 | 4 | 2 | 1 | 4,26355 | 20,818 | 5,0 |
| 36 | 1 | 1 | 3 | 4,26355 | 20,818 | 5,0 |
| 37 | 2 | 0 | 3 | 4,08941 | 21,715 | 1,1 |
| 38 | 4 | 3 | 0 | 4,01553 | 22,119 | 1,9 |
| 39 | 2 | 1 | 3 | 4,01553 | 22,119 | 1,9 |
| 40 | 4 | 1 | 2 | 3,94894 | 22,497 | 0,3 |
| 41 | 4 | 3 | 1 | 3,85926 | 23,027 | 30,6 |
| 42 | 5 | 0 | 1 | 3,85926 | 23,027 | 30,6 |
| 43 | 3 | 4 | 1 | 3,82578 | 23,231 | 23,6 |
| 44 | 0 | 5 | 1 | 3,82578 | 23,231 | 23,6 |
| 45 | 1 | 5 | 1 | 3,75861 | 23,652 | 10,4 |
| 46 | 3 | 0 | 3 | 3,72380 | 23,877 | 15,6 |
| 47 | 0 | 3 | 3 | 3,72380 | 23,877 | 15,6 |
| 48 | 3 | 1 | 3 | 3,65139 | 24,357 | 12,3 |
| 49 | 1 | 3 | 3 | 3,65139 | 24,357 | 12,3 |
| 50 | 5 | 2 | 1 | 3,59942 | 24,714 | 1,2 |
| 51 | 4 | 4 | 0 | 3,54454 | 25,103 | 0,1 |
| 52 | 3 | 2 | 3 | 3,48877 | 25,511 | 1,8 |
| 53 | 2 | 3 | 3 | 3,48877 | 25,511 | 1,8 |
| 54 | 4 | 3 | 2 | 3,44594 | 25,834 | 4,1 |
| 55 | 3 | 4 | 2 | 3,44594 | 25,834 | 4,1 |
| 56 | 5 | 1 | 2 | 3,40404 | 26,157 | 1,0 |
| 57 | 1 | 5 | 2 | 3,38191 | 26,332 | 0,8 |
| 58 | 0 | 0 | 4 | 3,35780 | 26,524 | 2,2 |
| 59 | 6 | 0 | 0 | 3,35780 | 26,524 | 2,2 |
| 60 | 5 | 3 | 1 | 3,34523 | 26,626 | 1,1 |
| 61 | 4 | 0 | 3 | 3,34523 | 26,626 | 1,1 |
| 62 | 0 | 6 | 0 | 3,32608 | 26,782 | 2,1 |
| 63 | 3 | 5 | 1 | 3,32608 | 26,782 | 2,1 |
| 64 | 6 | 1 | 0 | 3,31043 | 26,911 | 3,6 |
| 65 | 1 | 0 | 4 | 3,31043 | 26,911 | 3,6 |
| 66 | 5 | 2 | 2 | 3,26581 | 27,286 | 0,6 |
| 67 | 1 | 1 | 4 | 3,26581 | 27,286 | 0,6 |
| 68 | 6 | 0 | 1 | 3,25744 | 27,357 | 0,7 |
| 69 | 3 | 3 | 3 | 3,24744 | 27,443 | 1,2 |
| 70 | 2 | 5 | 2 | 3,24744 | 27,443 | 1,2 |
| 71 | 6 | 1 | 1 | 3,21490 | 27,726 | 0,1 |
| 72 | 2 | 0 | 4 | 3,18399 | 28,001 | 0,7 |

(fortgesetzt)

| Nummer | h | k | l | d [A] | 2θ [°] | I[%] |
|--------|---|---|---|-------|--------|------|
| 73 | 6 | 2 | 0 | 3,18399 | 28,001 | 0,7 |
| 74 | 4 | 2 | 3 | 3,17173 | 28,111 | 0,4 |
| 75 | 1 | 2 | 4 | 3,14203 | 28,383 | 1,2 |

**Patentansprüche**

1. Verfahren zur Herstellung eines pulverförmigen, porösen kristallinen Metallsilikats, umfassend die folgenden Schritte:

   a) Hydrothermalsynthese in einem wässrigen Gemisch enthaltend (A) mindestens eine Siliziumquelle, (B) mindestens eine Metallquelle und (C) mindestens einen Mineralisierer unter Erhalt einer wässrigen Suspension enthaltend ein poröses kristallines Metallsilikat als Reaktionsprodukt; und
   b) Kalzination des Reaktionsproduktes, **dadurch gekennzeichnet, dass** die Kalzination mittels Flammensprühpyrolyse bei einer adiabaten Verbrennungstemperatur in einem Bereich von 450-2200 °C durchgeführt wird, wobei die in Schritt a) erhaltene Suspension mit einem Feststoffgehalt von ≤ 70 Gew.-% in eine durch Verbrennen eines Brennstoffes in Gegenwart von Sauerstoff erzeugte Flamme versprüht wird unter Bildung eines pulverförmigen, porösen kristallinen Metallsilikats.

2. Verfahren nach Anspruch 1, **dadurch gekennzeichnet, dass** das poröse kristalline Metallsilikat eine Zeolithstruktur aufweist.

3. Verfahren nach Anspruch 2, **dadurch gekennzeichnet, dass** das poröse kristalline Metallsilikat eine Zeolithstruktur mit einer Kristallstruktur vom Typ LTA, MFI, FAU, MOR, MEL oder MWW aufweist.

4. Verfahren nach Anspruch 3, **dadurch gekennzeichnet, dass** die Metallquelle eine Quelle von Elementen ausgewählt aus der Gruppe bestehend aus Titan (Ti), Aluminium (Al), Zirkonium (Zr), Eisen (Fe), Zinn (Sn), Germanium (Ge), Indium (In) und Bor (B) ist.

5. Verfahren nach einem der Ansprüche 1-4, **dadurch gekennzeichnet, dass** der Brennstoff aus der Gruppe bestehend aus Wasserstoff, Methan, Ethan, Propan, Butan, Erdgas und Gemischen davon, ausgewählt wird.

6. Verfahren nach einem der Ansprüche 1-5, **dadurch gekennzeichnet, dass** die mittlere Verweilzeit der in Schritt a) erhaltenen Suspension bei deren Umsetzung in Schritt b) in einem Bereich von 0,1 bis 10 s liegt.

7. Verfahren nach einem der Ansprüche 1-6, **dadurch gekennzeichnet, dass** der Glühverlust nach DIN 18128:2002-12 des porösen kristallinen Metallsilikats weniger als 5 Gew.-% beträgt.

8. Verfahren nach einem der Ansprüche 1-7, **dadurch gekennzeichnet, dass** das wässrige Gemisch in Schritt a) zusätzlich geeignete Impfkristalle enthält.

9. Verfahren nach einem der Ansprüche 1-8, **dadurch gekennzeichnet, dass** das wässrige Gemisch in Schritt a) zusätzlich ein Templat ausgewählt aus der Gruppe bestehend aus Aminen, quartären Ammoniumverbindungen, Alkoholen und Gemischen davon, enthält.

10. Verfahren nach einem der Ansprüche 1-9, **dadurch gekennzeichnet, dass** Schritt a) bei einer Temperatur von 100 bis 250 °C unterm dabei erzeugten Eigendruck in einem druckfesten Reaktor durchgeführt wird.

11. Verfahren nach einem der Ansprüche 1-10, **dadurch gekennzeichnet, dass** in Schritt a) die Komponente (A) und die Komponente (B) gemeinsam in einem Stoff vorliegen und dieser Stoff ausgewählt ist aus der Gruppe bestehend aus amorphes Metall-Silizium-Mischoxid, amorphes mit Metalloxid dotiertes Siliziumdioxid, amorphes mit Metall imprägniertes Siliziumdioxid, Metallsilikat, mit Metall dotiertes Tetraalkylorthosilikat und Gemischen davon.

**12.** Verfahren nach Anspruch 11, **dadurch gekennzeichnet, dass** die Komponente (A) ein amorphes mit Metalloxid dotiertes Siliziumdioxid, ein amorphes mit Metall imprägniertes Siliziumdioxid oder ein amorphes Metall-Silizium-Mischoxid ist.

**13.** Verfahren nach einem der Ansprüche 1-10, **dadurch gekennzeichnet, dass** in Schritt a) die Komponente (A) als Feststoff und die Komponente (B) in flüssiger Form vorliegen.

**14.** Verfahren nach Anspruch 13, **dadurch gekennzeichnet, dass** die Komponente (A) ausgewählt ist aus der Gruppe bestehend aus pyrogen hergestelltes Siliziumdioxid, durch Fällung hergestelltes Siliziumdioxid, durch Sol-Gelprozess hergestelltes Siliziumdioxid und Gemischen davon, ausgewählt ist.

**15.** Verfahren nach Anspruch 14, **dadurch gekennzeichnet, dass** die Komponente (A) ein durch Fällung hergestelltes hochreines Siliziumdioxid oder ein pyrogen hergestelltes Siliziumdioxid ist.

**16.** Verfahren nach einem der Ansprüche 1-15, **dadurch gekennzeichnet, dass** im Anschluss an Schritt b) eine Verformung c) durchgeführt wird, umfassend die Schritte

(1) Zugabe von Wasser unter Erhalt einer wässrigen Suspension des pulverförmigen, porösen kristallinen Metallsilikats,
(2) Mischen der Suspension aus Schritt (1) mit Granulationshilfsmitteln,
(3) Kompaktierung, Granulation, Sprühtrocknen, Sprühgranulation oder Extrusion unter Erhalt eines porösen kristallinen Metallsilikats in Form von Mikrogranulaten, Kugeln, Tabletten, Vollzylindern, Hohlzylindern oder Wabenkörpern.

**Bild 1**

**Bild 2**

**Bild 3**

**Bild 4**

**Europäisches Patentamt**
**European Patent Office**
**Office européen des brevets**

# EUROPÄISCHER RECHERCHENBERICHT

**Nummer der Anmeldung**

EP 17 20 5799

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | EP 0 814 058 A1 (DEGUSSA [DE]) 29. Dezember 1997 (1997-12-29) * Seite 4, Zeilen 35-43; Beispiel 1 * ----- | 1-16 | INV. C01B39/02 C01B39/46 |
| A | DE 100 61 016 A1 (DEGUSSA [DE]) 4. Juli 2002 (2002-07-04) * Anspruch 4 * ----- | 1-16 | |
| A | DE 36 02 066 A1 (RENNEBECK KLAUS [DE]) 30. Juli 1987 (1987-07-30) * Anspruch all * ----- | 1-16 | |
| A | DE 10 2006 017701 A1 (DEGUSSA [DE]) 25. Oktober 2007 (2007-10-25) * Anspruch 6 * ----- | 1-16 | |

**RECHERCHIERTE SACHGEBIETE (IPC)**

C01B

Der vorliegende Recherchenbericht wurde für alle Patentansprüche erstellt

| Recherchenort | Abschlußdatum der Recherche | Prüfer |
|---|---|---|
| Den Haag | 27. März 2018 | Mattheis, Chris |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 20 5799

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-03-2018

| Im Recherchenbericht angeführtes Patentdokument | Datum der Veröffentlichung | Mitglied(er) der Patentfamilie | Datum der Veröffentlichung |
|---|---|---|---|
| EP 0814058 A1 | 29-12-1997 | AR 013582 A1 | 10-01-2001 |
| | | BR 9703631 A | 10-11-1998 |
| | | CN 1168860 A | 31-12-1997 |
| | | DE 19624340 A1 | 08-01-1998 |
| | | EP 0814058 A1 | 29-12-1997 |
| | | ES 2132984 T3 | 16-08-1999 |
| | | ID 17360 A | 24-12-1997 |
| | | IN 191885 B | 10-01-2004 |
| | | JP 3166904 B2 | 14-05-2001 |
| | | JP H1095610 A | 14-04-1998 |
| | | KR 100460363 B1 | 03-02-2005 |
| | | MY 115092 A | 31-03-2003 |
| | | SG 52988 A1 | 28-09-1998 |
| | | TW 416866 B | 01-01-2001 |
| | | ZA 9705388 B | 05-01-1998 |
| DE 10061016 A1 | 04-07-2002 | KEINE | |
| DE 3602066 A1 | 30-07-1987 | KEINE | |
| DE 102006017701 A1 | 25-10-2007 | BR PI0710278 A2 | 09-08-2011 |
| | | CN 101054185 A | 17-10-2007 |
| | | DE 102006017701 A1 | 25-10-2007 |
| | | EP 2007678 A1 | 31-12-2008 |
| | | EP 2610219 A2 | 03-07-2013 |
| | | JP 5306180 B2 | 02-10-2013 |
| | | JP 2009533313 A | 17-09-2009 |
| | | KR 20080102313 A | 24-11-2008 |
| | | RU 2008144800 A | 27-05-2010 |
| | | US 2009131694 A1 | 21-05-2009 |
| | | WO 2007118739 A1 | 25-10-2007 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- CN 101348263 A
- US 4410501 A
- EP 814058 A1
- CN 1482062
- WO 2010037702 A
- EP 0814058 A
- DE 102007049742
- WO 2017001366 A1
- US 20020041963 A1
- EP 0814058 B1

### In der Beschreibung aufgeführte Nicht-Patentliteratur

- Ullmann's Encyclopedia of Industrial Chemistry, Kapitel ''Zeolites. 15. April 2012
- *Advanced Materials Research,* 2011, vol. 287 (290), 317-321
- Zeolites. Ullmann's Encyclopedia of Industrial Chemistry. 15. April 2012
- **BARRETT ; JOYNER ; HALENDA.** *Journal of the American Chemical Society,* 1951, vol. 73, 373-380
- Ullmann's Enzyklopädie der Technischen Chemie. 1972, vol. 2, 295
- **LAMBERTI, C. ; BORDIGA, S. ; ZECCHINA, A. ; CARATI, A. ; FITCH, A.N. ; ARTIOLI, G. ; PETRINI, G. ; SALVALAGGIO, M. ; MARRA, G.L.** *J. Catal.,* 1999, vol. 183, 222